# FASCICULE DE BREVET EUROPEEN

(11) **EP 2 330 319 B1**
(45) Date de publication et mention de la délivrance du brevet: **20.02.2013**
(21) Numéro de dépôt: 10193342.2
(22) Date de dépôt: 01.12.2010
(51) Int. Cl.: F16H 55/08, F16H 55/22

(54) **Engrenage réducteur à vis sans fin et roue tangente et son utilisation dans un système de direction assistée électrique**
Reduziergetriebe mit Schnecke und Schneckenrad und deren Verwendung in einem elektrischen Servolenkungssystem
Reduction gear with a worm and a cylindrical worm wheel and use thereof in an electric power steering system

(30) Priorité: 01.12.2009 FR 0958536
(43) Date de publication de la demande: 08.06.2011
(73) Titulaire: Jtekt Europe, 69540 Irigny (FR)
(72) Inventeur: Besnault, Vianney, 69520, GRIGNY (FR)
(74) Mandataire: Chevalier, Renaud Philippe

(56) Documents cités:
- GB-A- 715 462
- JP-A- 2004 330 937
- JP-A- 2006 283 909
- US-A1- 2007 227 279

## Description

La présente invention concerne, d'une façon générale, les engrenages réducteurs du type à vis sans fin et roue tangente. Le document GB 715 462 divulgue ce type d'engrenage. Plus particulièrement, cette invention s'intéresse à de tels engrenages réducteurs incorporés à des systèmes de direction assistée électrique de véhicules automobiles, l'engrenage réducteur étant, dans ce cas d'application, intercalé entre un moteur électrique d'assistance et un élément mobile du système de direction, lui-même lié aux roues directrices du véhicule concerné. Dans ce contexte, l'invention s'applique encore plus particulièrement aux engrenages réducteurs à vis sans fin et roue tangente dans lesquels la roue tangente possède une denture réalisée en matière plastique, cette denture venant en prise avec les filets de la vis sans fin.

Dans les systèmes de direction assistée électrique, les couples demandés au pignon de direction ou à la colonne de direction étant élevés mais les vitesses de rotation demandées étant faibles, le moteur électrique d'assistance est habituellement associé à un mécanisme de transmission réducteur de vitesse, donc multiplicateur de couple. Il est utilisé ici de préférence un réducteur du type à vis ans fin et roue tangente, en raison de son rapport de démultiplication élevé. La vis sans fin est habituellement accouplée à l'arbre du moteur électrique d'assistance, tandis que la roue tangente, en prise avec la vis sans fin, est par exemple liée en rotation avec la colonne de direction du véhicule concerné, pour aider à l'entraînement en rotation de la colonne de direction et soulager ainsi l'effort manuel à exercer par le conducteur de ce véhicule.

Les directions assistées électriques, et en particulier leur engrenages réducteurs, ont bénéficié au cours des dernières années de progrès importants en termes de performances : augmentation du couple admissible, augmentation de la température maximale d'utilisation, etc. Cependant, des risques de cassure des dentures des engrenages réducteurs sont apparus notamment en cas d'utilisation prolongée. En particulier, un mode de cassure pose actuellement un problème, à savoir l'interférence en sommet de dent. Lors de cette interférence, les parties de plus grand diamètre des deux dentures, appartenant respectivement à la vis sans fin et à la roue tangente, entrent en contact. Cette interférence a pour conséquence de raccourcir considérablement la durée de vie de l'engrenage.

La présente invention vise à éviter cet inconvénient, et elle a donc pour but d'éliminer le phénomène d'interférence ou, du moins, de repousser son occurrence dans le temps, de manière à augmenter de manière sensible la durée de vie de l'engrenage.

A cet effet, l'invention a pour objet un engrenage réducteur à vis sans fin et roue tangente, avec une vis sans fin montée rotative autour d'un premier axe, et une roue tangente montée rotative autour d'un second axe, non orthogonal au premier axe, la roue tangente croisant ainsi la vis sans fin sous un angle différent de 0°, la roue tangente étant pourvue à sa périphérie d'une denture en prise avec les filets de la vis sans fin, cet engrenage réducteur étant essentiellement caractérisé par le fait que, dans la denture de la roue tangente, chaque dent vue de profil présente, de part et d'autre de son sommet, un chanfrein dont la hauteur est supérieure à 50 % du module géométrique de la denture de la roue tangente.

De préférence, le chanfrein est présent seulement au-delà du diamètre primitif de la denture de la roue tangente, afin de conserver une bonne qualité d'engrènement.

En prévoyant un tel chanfrein, on évite le contact entre les parties de plus grand diamètre des dentures en prise, appartenant respectivement à la vis sans fin et à la roue tangente. Le chanfrein occupe, de chaque côté de la dent, une fraction de la hauteur totale de la dent. Pour être efficace, la hauteur de ce chanfrein est choisie de préférence dans la plage comprise entre 10% et 120% du module géométrique de la denture de la roue tangente. Par un tel double chanfrein on évite non seulement l'interférence, dite interférence à vide, qui apparaît dès l'assemblage, mais aussi l'interférence qui peut résulter des déformations de denture sous charge.

Avantageusement, pour l'obtention de la géométrie ici proposée, la denture de la roue tangente est réalisée par un double taillage, en deux opérations d'usinage séparées, qui sont respectivement un taillage traversant et un taillage non traversant. Chaque dent possède ainsi un chanfrein traversant, réalisable par taillage traversant, et un profil actif globoïde non traversant, réalisable exclusivement par taillage non traversant.

L'invention sera mieux comprise à l'aide de la description qui suit, en référence au dessin schématique annexé représentant, à titre d'exemples, quelques formes de réalisation de cet engrenage réducteur à vis sans fin et roue tangente :
Figure 1 est une vue schématique d'un engrenage à vis sans fin et roue tangente, avec indication d'un angle de croisement de la roue tangente par rapport à la vis sans fin :
Figure 2 montre le profil d'une dent de roue tangente classique ;
Figure 3 montre le profil d'une dent de roue tangente conforme à la présente invention;
Figures 4 et 5 illustrent, sous la forme de deux schémas, un procédé de fabrication de la denture de la roue tangente ;
Figure 6 montre un détail agrandi d'une roue tangente, réalisable par le procédé des figures 4 et 5.

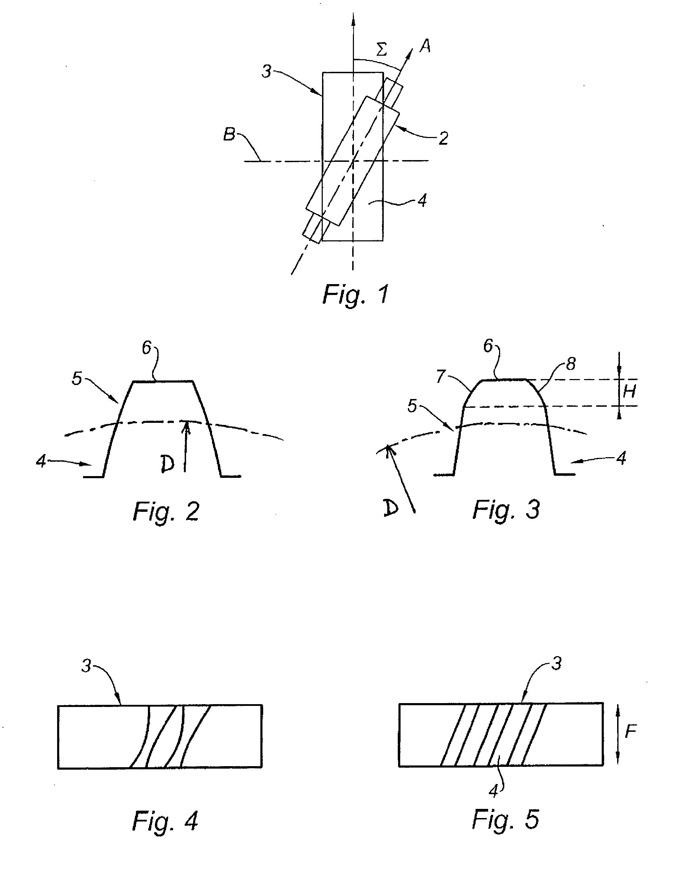

En se référant à la figure 1, un engrenage réducteur à vis sans fin et roue tangente comprend, de façon généralement connue :
- Une vis sans fin 2 montée rotative autour d'un premier axe A,
- Une roue tangente 3 montée rotative autour d'un second axe B, la roue tangente 3 étant pourvue à sa périphérie d'une denture 4 qui vient en prise avec les filets (non représentés) de la vis sans fin 2.

Dans le cas de certains engrenages réducteurs de ce genre, l'axe de rotation B de la roue tangente 3 est orthogonal à l'axe de rotation A de la vis sans fin 2, autrement dit la roue tangente 3 croise la vis sans fin 2 sous un angle nul. Dans le cas d'autres engrenages réducteurs, l'axe de rotation B de la route tangente 3 n'est pas orthogonal à l'axe de rotation A de la vis sans fin 2, autrement dit (comme représenté sur la figure 1) la roue tangente 3 croise la vis sans fin 2 sous un angle Σ non nul.

Dans le cas d'un angle de croisement Σ nul, et en particulier si la roue tangente 3 possède une denture 4 en matière plastique, les déformations de cette denture sous charge et en température sont très importantes et peuvent atteindre 25% du module géométrique de cette denture. Si la denture 4 possède des dents 5 de profil classique, tel que montré sur la figure 2, il se produit alors une interférence entre la partie de plus grand diamètre, autrement dit le sommet 6 de ces dents 5, d'une part, et la partie de plus grand diamètre des filets de la vis sans fin 2, d'autre part.

Pour éviter une telle interférence, et comme le montre la figure 3, il est prévu que chaque dent 5 de la denture 4 de la roue tangente possède un profil modifié, avec un chanfrein respectivement 7 et 8 de part et d'autre de son sommet 6. La hauteur H de ce double chanfrein 7, 8 est choisie dans la plage comprise entre 10% et 120% du module géométrique de la denture 4 de la roue tangente 3.

Dans le cas d'un angle de croisement Σnon nul, et notamment dans le cas d'une roue tangente 3 à denture globoïde (voir figure 4), l'interférence avec la vis sans fin 2 apparaît dès l'assemblage de l'engrenage réducteur. Pour éviter cette interférence, on forme dans ce cas un double chanfrein 7, 8 dans la région du sommet 6 de chaque dent 5 de la denture 4 de la route tangente 3. La hauteur H du chanfrein 7, 8 est ici avantageusement supérieure à 50% du module géométrique de cette denture 4.

De plus, dans tous les cas, le chanfrein 7, 8 est présent seulement au-delà du diamètre primitif D de la denture 4, comme l'illustre la figure 3, afin de conserver une bonne qualité d'engrènement.

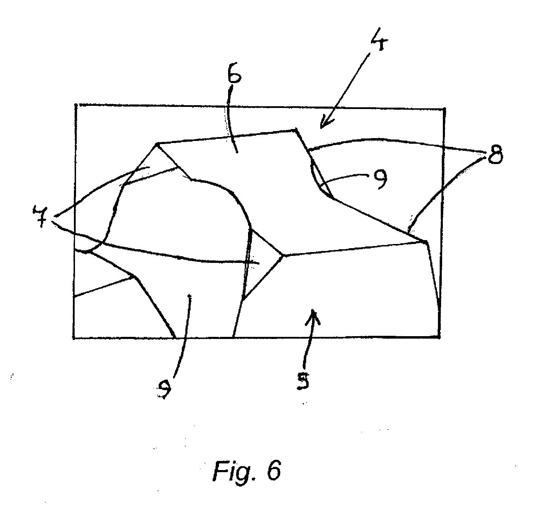

La configuration finale souhaitée des dents 5 peut présenter, comme le montre la figure 6, un profil actif 9 globoïde non traversant et un chanfrein 7, 8 traversant. Dans ce cas, la configuration désirée sera obtenue :
- Par un taillage « globoïde » et non traversant du profil actif 9 des dents 5, et lui seul, réalisé au moyen d'une première fraise (voir figure 4) ;
- Puis par un taillage « hélicoïdal » et traversant, formant les chanfreins 7, 8 et eux seuls au sommet 6 des dents 5, réalisé au moyen d'une deuxième fraise (voir figure 5).

L'invention est applicable à des engrenages à vis sans fin et roue tangente pouvant être réalisés en tous matériaux, par tous procédés, et pouvant avoir toutes destinations, dans le domaine automobile ou dans d'autres secteurs industriels.

## Revendications

1. Engrenage réducteur à vis sans fin et roue tangente, avec une vis sans fin (2) montée rotative autour d'un premier axe (A), et une roue tangente (3) montée rotative autour d'un second axe (B), non orthogonal au premier axe (A), la roue tangente (3) croisant ainsi la vis sans fin (2) sous un angle (Σ) différent de 0°, la roue tangente (4) étant pourvue à sa périphérie d'une denture (4) en prise avec les filets de la vis sans fin (2), **caractérisé en ce que**, dans la denture (4) de la roue tangente (3), chaque dent (5) vue de profil présente un, de part et d'autre de son sommet (6), un chanfrein (7, 8) dont la hauteur (H) est supérieure à 50% du module géométrique de la denture (4) de la roue tangente (3).

2. Engrenage réducteur selon la revendication 1, **caractérisé en ce que** le chanfrein (7, 8) est présent seulement au-delà du diamètre primitif (D) de la denture (4) de la route tangente (3).

3. Engrenage réducteur à vis sans fin et roue tangente selon la revendication 1 ou 2, **caractérisé en ce que** chaque dent (5) de la denture (4) de la roue tangente (3) possède un chanfrein (7, 8) traversant, réalisable par taillage traversant, et un profil actif (9) globoïde non traversant, réalisable exclusivement par taillage non traversant.

4. Utilisation d'un engrenage réducteur à vis sans fin et roue tangente selon l'une des revendications 1 à 3 dans un système de direction assistée électrique de véhicule automobile, l'engrenage réducteur étant intercalé entre un moteur électrique d'assistance et un élément mobile du système de direction, lui-même lié aux roues directrices du véhicule concerné.

## Claims

1. A worm screw and tangential wheel reduction gear with a worm screw (2) rotatably mounted around a first axis (A), and a tangential wheel (3) rotatably mounted around a second axis (B), non-orthogonal to the first axis (A), the tangential wheel (3) thus crossing the worm screw (2) with an angle (Σ) different from 0°, the tangential wheel (4) being provided at its periphery with teeth (4) engaged with the threads of the worm screw (2), **characterized in that**, in the teeth (4) of the tangential wheel (3), each tooth (5) in a profile view has, on either side of its top, a chamfer (7, 8), the height (H) of which is greater than 50% of the geometrical modulus of the teeth (4) of the tangential wheel (3).

2. The reduction gear according to claim 1, **characterized in that** the chamfer (7, 8) is only present beyond the primitive diameter (D) of the teeth (4) of the tangential wheel(3).

3. The worm screw and tangential wheel reduction gear according to claim 1 or 2, **characterized in that** each tooth (5) of the teeth (4) of the tangential wheel (3) has a through-chamfer (7, 8), which may be made by cutting through, and a non-through globoidal active profile (9), which may be made exclusively by not cutting through.

4. The use of a worm screw and tangential wheel reduction gear according to one of claims 1 to 3 in a motor vehicle electrically assisted steering system, being inserted between an assist electric motor and a movable element of the steering system, itself bound to the steered wheels of the relevant vehicle.

## Patentansprüche

1. Reduziergetriebe mit Schnecke und Schneckenrad mit einer Schnecke (2), die rotierend um eine erste Achse (A) montiert ist, und einem Schneckenrad (3), das rotierend um eine zweite Achse (B) montiert ist, die nicht orthogonal zur ersten Achse (A) ist, wobei das Schneckenrad (3) dadurch die Schnecke (2) in einem Winkel (Σ) unterschiedlich von 0° kreuzt, wobei das Schneckenrad (4) an seinem Umfang mit einer Zahnung (4) in Ineingriffnahme mit den Schraubengängen der Schnecke (2) ausgestattet ist, **dadurch gekennzeichnet, dass** in der Zahnung (4) des Schneckenrads (3) jeder Zahn (5), im Profil gesehen, auf der einen und der anderen Seite seiner Spitze (6) eine Schräge (7, 8) aufweist, deren Höhe (H) um 50 % höher ist als das geometrische Modul der Zahnung (4) des Schneckenrads (3).

2. Reduziergetriebe nach Anspruch 1, **dadurch gekennzeichnet, dass** die Schräge (7, 8) nur jenseits des Teilkreisdurchmessers (D) der Zahnung (4) des Schneckenrads (3) vorhanden ist.

3. Reduziergetriebe mit Schnecke und Schneckenrad nach Anspruch 1 oder 2, **dadurch gekennzeichnet, dass** jeder Zahn (5) der Zahnung (4) des Schneckenrads (3) eine durchgehende Schräge (7, 8), die durch durchgehendes Abtragen herstellbar ist, und ein aktives globoides nicht durchgehendes Profil (9) besitzt, das ausschließlich durch nicht durchgehendes Abtragen herstellbar ist.

4. Verwendung eines Reduziergetriebes mit Schnecke und Schneckenrad nach einem der Ansprüche 1 bis 3 in einem elektrischen Servolenksystem eines Kraftfahrzeugs, wobei das Reduziergetriebe zwischen einem elektrischen Hilfsmotor und einem bewegbaren Element des Lenksystems zwischengestellt ist, das selbst mit den Lenkrädern des betreffenden Fahrzeugs verbunden ist.
